# EUROPEAN PATENT SPECIFICATION

(11) **EP 1 465 840 B1**
(45) Date of publication and mention of the grant of the patent: **04.05.2005**
(21) Application number: 03700851.3
(22) Date of filing: 10.01.2003
(51) Int. Cl.: C03B 5/167

(54) **PLATINUM METAL BASED ARTICLE FOR HIGH TEMPERATURE APPLICATIONS**
KÖRPER AUF BASIS VON PLATINMETALL FÜR HOCHTEMPERATURANWENDUNGEN
ARTICLE A BASE DE PLATINE DESTINE A DES UTILISATIONS A TEMPERATURE ELEVEE

(30) Priority: 15.01.2002 GB 0200758
(43) Date of publication of application: 13.10.2004
(73) Proprietor: JOHNSON MATTHEY PUBLIC LIMITED COMPANY, London SW1Y 5BQ (GB)
(72) Inventor: Doyle, Mark Laurence, NR Royston, Herts SG8 9TT (GB)
(74) Representative: Nunn, Andrew Dominic
(86) International application number: PCT/GB2003/000068
(87) International publication number: WO 2003/059826

(56) References cited:
- EP-A- 0 364 153
- EP-A- 1 151 969
- DE-A- 4 326 143
- DE-C- 10 117 664
- DE-C- 19 941 610
- PATENT ABSTRACTS OF JAPAN vol. 2002, no. 10, 10 October 2002 (2002-10-10) & JP 2002 167674 A (FURUYA KINZOKU:KK), 11 June 2002 (2002-06-11)

## Description

### HIGH TEMPERATURE DEVICES AND ARTICLES

This invention concerns high temperature devices and articles, meaning especially devices and articles used at molten glass temperatures, and which need to be protected from attack by molten glass.

In the glass industry, homogenising and gobbing stirrers are used. These parts require excellent high temperature strength at glass forming temperatures, which are generally in the range 1000 to 1250°C. The traditional material chosen for such parts is molybdenum (Mo) which is clad in platinum foil. Although Mo is resistant to molten glass, it is rapidly oxidised and volatilised in contact with air at temperatures above 700°C. To avoid oxidation, the Pt cladding must completely contain the Mo core and the space between the Pt cladding and the Mo part is evacuated to remove any oxygen. However, any direct contact between the Mo core and Pt cladding at elevated temperatures allows rapid inter-diffusion, so that the protection offered by the Pt cladding is compromised over time. It is therefore conventional to provide a protective coating on the Mo part, such as a sprayed ceramic, to act as a diffusion barrier. Such a multi-step construction adds complication and cost.

In recent years, oxide dispersion strengthened ("ODS") alloys have become available (examples include PM1000, PM2000, , MA758, MA956) with adequate high temperature strengths to act as stirrer cores for use in molten glass. Unlike Mo, these ODS materials do not catastrophically oxidise, but form relatively protective surface oxide layers. However, these ODS materials are not resistant to molten glass and therefore still require protection in the form of Pt cladding. The Pt cladding does not have to be a complete containment because of the greater resistance of the core material to oxidation. Interdiffusion remains a problem if the Pt and ODS materials are in direct contact. Unfortunately, the best types of ceramic interlayers which could be considered as a diffusion barriers, do not have expansion coefficients which match the requirements of the ODS alloys. Accordingly, these diffusion barrier layers can become damaged and spall off in service. In particular, the possibility of using part claddings (an opportunity to reduce cost) requires that the diffusion barrier layer extend right up to (or just beyond) the free edge of the cladding. This is a vulnerable point because if spalling of the interlayer did occur it could cause contamination of the glass.

There remains a need for a protected article which does not suffer significant interdiffusion yet retains adequate strength in a glass furnace. It is also an advantage if the interlayer is flexible under the conditions of operation such that it does not crack, crumble or spall.

Accordingly, the present invention provides a high temperature article comprising a base metal part and a platinum group metal ("PGM") protective layer, separated by a diffusion limiting layer, characterised in that the diffusion limiting layer is a foraminate PGM structure.

Desirably, the foraminate PGM structure is a relatively low-density fabric, including woven or knitted fabrics, felts and sintered non-woven fabrics. It should be understood that other structures are included within the broadest scope of the invention. These may be highly expanded PGM sheet, PGM sheets with impressed "pimples", and others. However, the presently preferred structure is a knitted PGM fabric. We refer to Johnson Matthey USP 5,266,293 which discloses the manufacture of such knitted fabrics as catalyst gauzes, especially for ammonia oxidation. Such knitted PGM fabrics are commercially available.

The PGM protective layer is preferably Pt or a Pt alloy. The foraminate PGM structure is preferably Pt or a Pt alloy. The preferred non-woven structures are made from thread or wire of approximately 50- 85 µm diameter or from ribbon.

Preferred PGM structures have open areas of 60% or more and densities in the range 250-1200g/m². This permits air circulation, which has benefits with ODS materials in maintaining stable, protective oxide layers and also limits points of direct PGM-base metal contact. Knitted structures have additional advantages including flexibility, so that they can readily conform to the shape of the underlying part, which may be a stirrer with a complex external screw. A knitted PGM fabric has minimal contact points so that any diffusion has to be through the contact points and multiple thin wires or ribbon, thus reducing diffusion of species from the PGM protective layer to the base metal part and *vice versa*.

A preferred base metal part is made from ODS material such as that marketed as PM2000 (Plansee Metals Ltd).

The invention will now be described by way of example and with reference to the accompanying schematic drawing.

A PM2000 ODS part, 1, has a knitted Pt-5%Rh gauze (JM 'Nitrolok'), 2, applied thereto and fixed in place by hammer welding. Gauze 2 is knitted on a commercial knitting machine from 76 µm Pt-Rh wire to a weight of 620g/m² Fitted over the Pt gauze is a Pt cladding 3, constructed from 1mm thick Pt sheet by traditional methods.

A test article according to the invention has been tested in contact with molten glass for 1500 hours without failure or evidence of appreciable interdiffusion.

The skilled person will be able to modify and optimise the invention without departing from its scope.

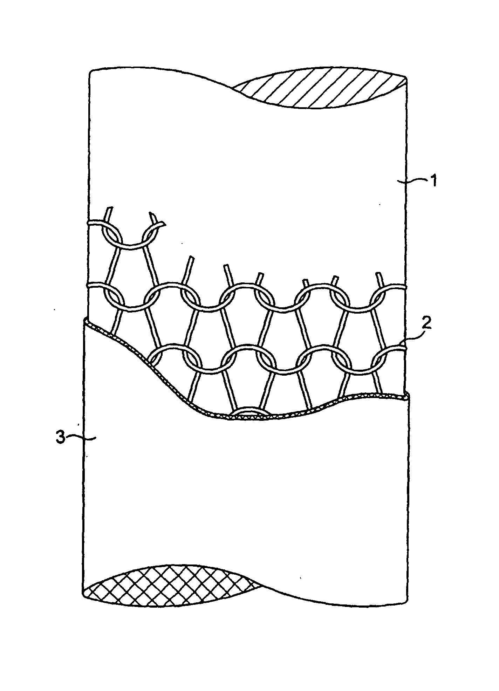

## Claims

1. A high temperature article comprising a base metal part and a platinum group metal ("PGM") protective layer, separated by a diffusion limiting layer, **characterised in that** the diffusion limiting layer is a foraminate PGM structure.

2. An article according to claim 1, wherein the foraminate PGM structure is a fabric made from wire or ribbon.

3. An article according to claim 1 or 2, wherein both the PGM protective layer and the foraminate PGM structure are Pt or a Pt alloy.

4. An article according to claim 3, wherein the foraminate PGM structure is a layer of knitted or woven Pt wire or ribbon.

5. An article according to any of the preceding claims, wherein the base metal part is formed from ODS materials including PM2000, PM1000, MA758, MA956.

6. An article according to any of the preceding claims, in the form of a homogenising or gobbing stirrer or other metallic part for use in a glass furnace.

## Patentansprüche

1. Hochtemperaturerzeugnis, umfassend einen Teil aus einem unedlen Metall und eine Schutzschicht aus einem Platingruppenmetall (PGM), getrennt durch eine die Diffusion begrenzende Schicht, **dadurch gekennzeichnet, dass** die die Diffusion begrenzende Schicht eine eine kleine Öffnung aufweisende PGM-Struktur ist.

2. Erzeugnis nach Anspruch 1, wobei die eine kleine Öffnung aufweisende PGM-Struktur ein Gewebe aus Draht oder einem Band ist.

3. Erzeugnis nach Anspruch 1 oder 2, wobei sowohl die Schutzschicht aus einem PGM als auch die eine kleine Öffnung aufweisende PGM-Struktur aus Pt oder einer Pt-Legierung sind.

4. Erzeugnis nach Anspruch 3, wobei die eine kleine Öffnung aufweisende PGM-Struktur für eine Schicht aus gewirktem oder gewobenen Pt-Draht oder -Band steht.

5. Erzeugnis nach einem der vorstehenden Ansprüche, wobei der Teil aus unedlem Metall gebildet ist aus ODS-Materialien, einschließlich PM2000, PM1000, MA758, MA956.

6. Erzeugnis nach einem der vorstehenden Ansprüche in Form eines Homogenisierungs- oder Versatz(Gobbing)-Rührers oder anderen metallischen Teils zur Verwendung in einem Glasofen.

## Revendications

1. Objet pour températures élevées comprenant une partie métallique de base et une couche de platinoïde (« PGM ») protectrice, séparées par une couche limitant la diffusion, **caractérisé en ce que** la couche limitant la diffusion est une structure trouée de PGM.

2. Objet selon la revendication 1, dans lequel la structure trouée de PGM est un tissu fabriqué à partir d'un fil métallique ou d'un ruban.

3. Objet selon la revendication 1 ou 2, dans lequel la couche de PGM protectrice et la structure trouée de PGM sont composées de Pt ou d'un alliage de Pt.

4. Objet selon la revendication 3, dans lequel la structure trouée de PGM est une couche de ruban ou de fil de Pt tricoté ou tissé.

5. Objet selon l'une quelconque des revendications précédentes, dans lequel la partie métallique de base est formée à partir de matériaux ODS comprenant le PM2000, le PM1000, le MA758, le MA956.

6. Objet selon l'une quelconque des revendications précédentes, sous la forme d'un agitateur pour l'homogénéisation ou les paraisons ou une autre partie métallique destinée à être utilisée dans un four de verrerie.
